# EUROPEAN PATENT APPLICATION

(11) **EP 4 148 074 A1**
(43) Date of publication of application: **15.03.2023**
(21) Application number: 21075010.5
(22) Date of filing: 08.09.2021
(51) Int. Cl.: C08F 218/08, C08F 218/10, C09D 131/02, C09D 131/04

(54) **TWO PACK AMBIENT CURE CROSSLINKABLE PAINT COMPOSITIONS COMPRISING COPOLYMERS OF VINYL BRANCHED ESTERS AND VINYL SILANES**

(71) Applicant: Hexion Inc., Columbus, OH 43215 (US)
(72) Inventor: Steinbrecher, Christophe, 1348 Ottignies Louvain-La-Neuve (BE); Boulet, Laure, 1348 Ottignies Louvain-La-Neuve (BE); Heymans, Denis, 1348 Ottignies Louvain-La-Neuve (BE)
(74) Representative: Sonnenhauser, Thomas Martin

(57) **Abstract**

The invention relates to compositions to be used in low temperature (<80°C), moisture curable, two package pigmented coatings.

The copolymer compositions can be formulated to the desired viscosity that allows the application by standard methods, and the curing is optimized in the presence of an appropriate catalyst as two pack system to be cured at room temperature.

## Description

### FIELD OF THE INVENTION

The present invention relates to compositions to be used in low temperature (<80°C) moisture curable, two package pigmented coatings.

The paint composition composed of
a part A which is composed of:
- Aa. 20 to 80wt% of a copolymer composed
- Aa1, 97 to 0wt% of vinyl ester monomers of the formula 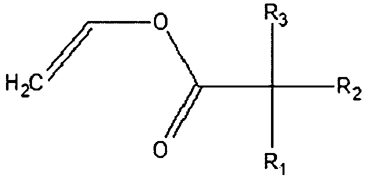
- wherein R1, R2, R3 are hydrogen or alkyl groups with 1 to 15 carbon atoms, the total number of carbon atoms of R1, R2, and R3 ranging from 1 to 20; and
- Aa2 0 to 40wt% of vinyl trimethoxy silane or vinyl triethoxy silane monomers,
- Aa3 0 to 40wt% of any other silane functional monomer
- Aa4 60 to 0% of vinyl acetate,
- Aa5 97 to 0% of acrylate or methacrylate monomers and,
- Aa6 0 to 30% of other copolymerisable monomer,
- Ab1 20 to 80% solvents,
- Ab2 0 to 60% pigments and fillers,
- Ab3 0 to 20% paint additives,
- Ab4 1 to 10% moisture scavenger
- Ac 0 to 70% of a polylol

And the sum of Aa2 and Aa3 is at least 5% and of a part B is composed a catalyst solution composed of
- 0.1 to 50% of catalyst mix AND/OR aliphatic isocyanates
- 99.9 to 50% of solvents
- 0 to 50% pigments and fillers
- 0 to 50% of paint additives
whereby the weight ratio of part A/B is between 99/1 and 1/1, and whereby the polymer Aa and the polyol Ac has a number average molecular weight Mn between 1500 and 15000.

Said paint composition is particularly suitable for ambient cure coatings applications.

### BACKGROUND OF THE INVENTION

The use of silane in coating formulations are well known and especially acrylic-silane coating compositions have an accepted cure rate and upon curing product films having good physical and chemical properties. However, one important disadvantage of these compositions is their short potlife. Since decades options to solve this main drawback have been addressed by the industry.

The US 4, 043, 953 is about ambient temperature, moisture-curable coating compositions in which improved potlife is achieved by this invention comprise a blend of an acrylic-silane interpolymer derived from monomers which are devoid of active hydrogen atoms, a cure accelerating catalyst and a monomeric hydrolytically reactive organosilicon compound represented by the structural formula: Xn Si(OR)4-n.

The EP0007765 stated the following comment on the above: while the method disclosed in US 4,043,953 undoubtedly improves the stability of polymeric organosilanes, we have found that this method has certain limitations, especially when one desires to employ the polymeric organosilanes as adhesion promoter additives, rather than as coatings per se. For a number of reasons the viscosity stability requirements are somewhat more stringent when the polymeric organosilane is used as an adhesion promoter additive, rather than as a coating material. Therefore, the EP 0007765 and EP 0050249 have found the presence of a low molecular weight alcohol and a monomeric hydrolytically reactive compound has a synergic effect on the stability of the acrylic-silane interpolymer.

The WO 04067576 demonstrates that a stable coating formulation can be obtained when the acrylic polymer is substantially free of functional groups that can react with the polysiloxane or with the catalyst. The document is silent about the coating properties.

Accordingly, there is a need for compositions which have a reduced cure cycle and temperature while minimizing the effects of undesirable chemicals and in methods for applying such compositions. Most preferably, the industry is looking for systems able to cure at room temperature after application and yet being stable in the can before application.

### SUMMARY OF THE INVENTION

Embodiments of the invention are directed to a process leading to paint compositions which shows improved stability in combination with a catalyst and/or aliphatic isocyanates and processes for applying the paint composition.

In one aspect of the invention, a method is provided for applying a paint composition composed of a part A including an organosilane copolymer Aa derived from at least Aa₁ and Aa₂ monomers, wherein, the Aa₁ monomer comprises a vinyl ester monomer and the Aa₂ monomer comprises a vinylsilane monomer. The composition may further include one or more monomer selected from the group consisting: Aa3 any other silane functional monomer, Aa4 vinyl acetate, Aa5 of acrylate or methacrylate monomers and, Aa6 of other copolymerisable monomers.

The composition may further include one or more materials selected from the group consisting of a solvent, a pigment, a filler, a paint additive, a water scavenger, a polyol, and combinations thereof. and of a part B is composed a catalyst solution composed of
- 0.1 to 50% of catalyst mix AND/OR aliphatic isocyanates
- 99.9 to 50% of solvents
- 0 to 50% pigments and fillers
- 0 to 50% of paint additives.

### DETAILED DESCRIPTION OF THE INVENTION

The paint composition composed of a part A including
an organosilane copolymer Aa derived from at least Aa₁ monomer comprising a vinyl ester monomer may have the formula: 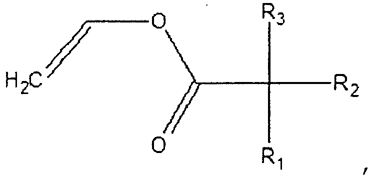 wherein R1, R2, R3 are hydrogen or alkyl groups with 1 to 15 carbon atoms, the total number of carbon atoms of R1, R2, and R3 ranging from 1 to 20. In one embodiment, the total number of carbon atoms of R1, R2, and R3 ranging from 5 to 12. Suitable vinyl esters include those derived from branched acids such as pivalic acid, 2-ethyl hexanoic, neo acids (also known as VERSATIC ACID ^{™} from Hexion Inc.) with the total carbon atoms in R1, R2, and R3 are 7, 8, 9, and 10. Examples of these vinyl ester monomers include vinyl pivalate, vinyl 2 ethylhexanoate, vinyl neodecanoate and vinyl neo nonanoate and combinations thereof. Commercial examples of the vinyl ester monomers include VeoVa 9, VeoVa 10, and combinations thereof, commercially available from Hexion Inc., (Company name) of Columbus, Ohio.

The vinyl ester monomer, Aa₁ monomer, may comprise from 97 wt.% to 0 wt.%, such as from 95 wt.% to 30 wt.%, from 90 wt.% to 50 wt.%, of the total weight percent (100 wt.%) of the monomers.

The vinyl silane monomer, Aa₂ monomer, may comprises the formula: 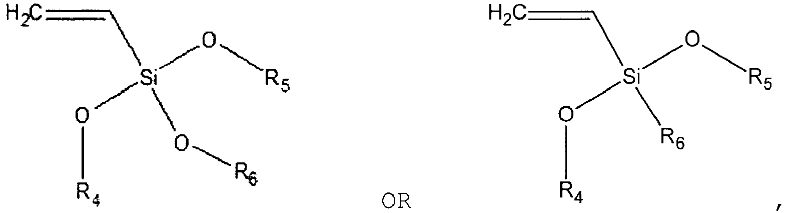 wherein R4, R5, and R6 are alkyl groups having 1 to 4 carbon atoms. Suitable vinyl silanes and R4-R6 are methoxy or ethoxy. Suitable examples of these vinyl silane monomers include vinyl trimethoxy silane, vinyl triethoxy silane, methyl vinyl diethoxy silane_, and combinations thereof. Commercial examples of the vinyl silane monomers include Silquest A171 and Silquest A151, and combinations thereof, are commercially available from Momentive Performance Materials Inc, from New York, USA (Country, or City and state if US).

The vinyl silane monomer, Aa₂ monomer, may comprise from 0 wt.% to 40% wt.%, such as from 2 wt.% to 30 wt.%, for example, from 5 wt.% to 25 wt.%, of the total weight percent (100 wt.%) of the monomers.

The monomer comprising an acrylosilane or methacrylo silane, Aa₃ monomer, may also be used for the copolymer. Suitable examples of the acrylosilane monomer include Methacryloxypropyl methyldimethoxysilane, methacryloxy trimethoxysilane and methacryloxy triethoxysilane and combinations thereof. Commercial examples of the acrylosilane monomer include Silquest A 174, Silquest* Y-11878 and combinations thereof, are commercially available from Momentive Performance Materials Inc, (Company name) from New York, USA (Country, or City and state if US)

The monomer comprising an acrylosilane, Aa₃ monomer, may comprise from 0 wt.% to 40% wt.%, such as from 0 wt.% to 30 wt.%, from 5 wt.% to 20 wt.%, of the total weight percent (100 wt.%) of the monomers.

The monomer comprising vinyl acetate, Aa₄ monomer, may comprise from 0 wt.% to 60% wt.%, such as from 5 wt.% to 60 wt.%, from 20 wt.% to 60 wt.%, of the total weight percent (100 wt.%) of the monomers.

The monomer comprising an acrylate ester, a metacrylate ester, or a combination thereof, Aas monomer, may also be used for the copolymer. Suitable examples of the Aa5 monomer include methyl methacrylate, ethyl methacrylate, n-butyl methacrylate,iso-butyl methacrylate, ter-butyl methacrylate, isopropyl methacrylate, and isobornyl methacrylate, ethyl acrylate, butyl acrylate, and 2-ethyl hexyl acrylate and combinations thereof. The monomer comprising an acrylate ester, a metacrylate ester, or a combination thereof, Aa₅ monomer, may comprise from 0 wt.% to 97% wt.%, such as from 0 wt.% to 50 wt.%, from 5 wt.% to 40 wt.%, of the total weight percent (100 wt.%) of the monomers.

The monomer comprising any other vinyl monomer than a vinyl ester or vinyl silane, Aa₆ monomer, may also be used for the copolymer. Suitable examples of the Aa₆ monomer include N-vinyl pyrolidone, vinyl ethers, acrylic acid, methacrylic acid and combinations thereof.

The monomer comprising any other vinyl monomer than a vinyl ester or vinyl silane, A₆ monomer, may comprise from 0 wt.% to 30% wt.%, such as from 0 wt.% to 15 wt.%, from 2 wt.% to 10 wt.%, of the total weight percent (100 wt.%) of the monomers.

In one embodiment of the invention, the copolymer derived from at least the Aa₁ and Aa₂ monomers comprises:
from about 0 wt.% to about 97% wt.% of Aa₁ monomer;
from about 0 wt.% to about 40% wt.% of Aa₂ monomer;
from about 0 wt.% to about 40% wt.% of Aa₃ monomer;
from about 0 wt.% to about 60% wt.% of Aa₄ monomer;
from about 0 wt.% to about 97% wt.% of Aa₅ monomer; and
from about 0 wt.% to about 30% wt.% of Aa₆ monomer, wherein the wt.% is based on the total weight of the at least Aa₁ and Aa₂ monomers, and the total weight percent is 100 wt.%.

The copolymer may have a Number average molecular weight from 1500 daltons to 15,000 daltons.

In one embodiment, a coating formulation comprising the copolymer based on the monomers described herein, an organic solvent, pigments and fillers, paint additives, a moisture scavenger described herein, and optionally a polyol.

The organic solvent Ab₁ may be selected from the group of esters, ethers, ketones, aromatics and aliphatics and combinations thereof. Examples of organic solvents include butyl acetate, xylene, methyl amyl ketone, ethoxyethyl propionate, and combinations thereof.

In one embodiment, the organic solvent may comprise from 20 wt.% to 80 wt.%, such as from 20 wt.% to 60 wt.%, from 25 wt.% to 50 wt.%, of the total weight percent (100 wt.%) of the paint composition Aa.

Pigments and fillers Ab₂ may include anatase and rutile type of titanium dioxide, lead oxide, zinc oxide, iron oxides, carbon black and organic pigments and combinations thereof. Examples of suitable pigments may be selected from the group consisting of titanium oxide, iron oxide and combinations thereof. The formulation may have 0 wt.% of the pigments. When present the pigments may be from 0 wt.% to 60 wt.%, such as from 0 wt.% to 40 wt.%, for example, from 10wt.% to 30 wt.%, of the total weight percent (100 wt.%) of the Paint composition and as fillers may include barium and calcium sulfate, silica oxides, silicates and combinations thereof. The formulation may have 0 wt.% of the fillers. When present the fillers may be from 0 wt.% to 60 wt.%, such as from 0wt.% to 40wt.%, from 5 wt.% to 30 wt.%, of the total weight percent (100 wt.%) of the Paint composition.

Paint additives Ab₃ may include UV stabilizers, corrosion inhibitors, heat stabilizers, slip and mar additives, biocides, thickeners and combinations thereof. The formulation may have 0 wt.% of the paint additives. When present the paint additives may be from 0 wt.% to 20 wt.%, such as from 1 wt.% to 15 wt.%, from 2 wt.% to 10 wt.%, of the total weight percent (100 wt.%) of the Paint composition.

Suitable moisture scavenger Ab₄ may be selected from the group consisting of vinyl silanes, orthoesters, titanates, zirconates, oxazolidines, calcium sulfate, calcium oxide, isocyanates zeolite based molecular sieves and combinations thereof. Examples of moisture scavengers include vinyl trimethoxy silane, vinyl triethoxy silane, trimethyl orthoformate, triethyl orthoformate, triethyl orthoacetate, tetra n-butyl titanate, di-isobutoxyl titanium chelate with ethyl acetoacetate, and combinations thereof.

In one embodiment, the moisture scavenger may comprise from 1 wt.% to 10 wt.%, such as from 1 wt.% to 6 wt.%, from 2 wt.% to 5 wt.%, of the total weight percent (100 wt.%) of the paint formulation.

The Ac polyol may comprise any acrylic or polyester polymer with an hydroxyl value of 20 to 200 mgKOH/g and a number average molecular weight Mn between 1500 and 15000 Dalton.

In one embodiment, the composition may comprise Ac from 0 wt.% to 70 wt.%, such as from 0 wt.% to 50 wt.%, from 20 wt.% to 40 wt.%, of the total weight percent (100 wt.%) of the coating formulation.

In the part B of the paint composition :

the catalyst may be selected from the group of a strong acid, a lewis acid, a carboxylic acid, a base, like an amine, caustic or an alcolate and combinations thereof. An alternative catalyst is a nitrate of a polyvalent metal ion such as calcium nitrate, magnesium nitrate, aluminium nitrate, zinc nitrate, or strontium nitrate, Nitrates might also be conveniently combined with amines. Other catalysts include carbonates such as sodium or calcium carbonate, aliphatic isocyanates such as hexamethylene di-isocyanate trimers and isophorone di-isocyanate trimers, dimers and/or biuret and derivatives thereof. Commercial examples of catalysts include SiliXan Cat 240 (SiliXan GmbH), Nacure 4054, Nacure 5076, TYZOR TNBT, TYZOR 9000, K-Kat 670(King Industries), DBTDL (dibutyl tin dilaurate) (Sigma Aldrich),3-Aminopropyltrimethoxysilane (Sigma), 2-ethyl hexanoic acid, Versatic acid (Hexion), Tolonate HDT and Macryanal 515 and combinations thereof. A preferred commercial catalyst for a two package system for coating formulation is DBTDL.

In one embodiment, the catalyst may comprise from 0.1 wt.% to 50?? wt.%, such as from 0,2 wt.% to 40 wt.%, from 10 wt.% to 30 wt.%, of the total weight percent (100 wt.%) of the Paint composition.

The organic solvent may be selected from the group of esters, ethers, ketones, aromatics and aliphatics and combinations thereof. Examples of organic solvents include butyl acetate, xylene, methyl amyl ketone, ethoxyethyl propionate, and combinations thereof.

In one embodiment, the organic solvent may comprise from 20 wt.% to 80 wt.%, such as from 20 wt.% to 60 wt.%, from 25 wt.% to 45 wt.%, of the total weight percent (100 wt.%) of the Paint composition Aa.

Pigments and fillers may include anatase and rutile type of titanium dioxide, lead oxide, zinc oxide, iron oxides, carbon black and organic pigments and combinations thereof. Examples of suitable pigments may be selected from the group consisting of titanium oxide, iron oxide and combinations thereof. The formulation may have 0 wt.% of the pigments. When present the pigments may be from 0 wt.% to 60 wt.%, such as from 10wt.% to 60 wt.%, for example, from 20wt.% to 40 wt.%, of the total weight percent (100 wt.%) of the paint composition and as fillers may include barium and calcium sulfate, silica oxides, silicates and combinations thereof. The formulation may have 0 wt.% of the fillers. When present the fillers may be from 0 wt.% to 60 wt.%, such as from 0wt.% to ??wt.%, from ?? wt.% to ?? wt.%, of the total weight percent (100 wt.%) of the paint composition.

Paint additives may include UV stabilizers, corrosion inhibitors, heat stabilizers, slip and mar additives, biocides, thickeners and combinations thereof. The formulation may have 0 wt.% of the paint additives. When present the paint additives may be from 0 wt.% to 20 wt.%, such as from 2 wt.% to 20 wt.%, from 5 wt.% to 15 wt.%, of the total weight percent (100 wt.%) of the paint composition.

The ratio of part A/B is between 99/1 to 1/1.

In order to provide a better understanding of the present invention including representative advantages thereof, the following examples are offered.

### EXAMPLES:

In order that those skilled in the art may more fully understand the invention presented herein, the following procedures and examples are set forth. Unless otherwise indicated, the following units of measurement and definitions apply in this application: all parts and percentages are by weight; temperatures are in degrees centigrade (°C).

### Experimental

For the following examples, the data was derived in accordance with the following procedures.

Solids: The solids is the weight percentage of non volatile material present in the coating formulations. It is measured by weight loss in ventilated oven for 1hr at 110°C

Viscosity: The viscosity is the resistance of the polymer preparation to flow. Viscosity is determined by Brookfield viscosimeter.

Molecular weight: The molecular weight is given in weight & number average Mw determined by Gel permeation chromatograph using polystyrene as reference, tetrahydrofurane as elution solvent and Refractive Index as detector like described in DIN Standard 55672

Potlife: The potlife is an estimation of the time during which the polymer composition can be used for a specific application. Potlife is typically determined by the time taken for the formulated system to double its initial viscosity in a closed can once the application has been performed.

Shelf-life: The shelf-life is an estimation of the time that the formulated binder can be stored without losing its performance in typical storage conditions. The shelf-life is typically determined by measuring viscosity variation.

The following examples were performed and are provided to illustrate the invention and should not be interpreted as limiting the scope of the invention.

### Examples

Blend for 2KPU approach: Combining VV-silanes with APO isocyanate

| **Initial reactor charge** | Ex. 1 |
|---|---|
| Butyl Acetate | 18.5 |
| Styrene | 0 |
| VeoVa 10 | 0 |

| **Initiator shot** | |
|---|---|
| Luperox 531M80 | 0.4 |

| **Monomer mix** | |
|---|---|
| VeoVa 9 | 52 |
| VeoVa 10 | 28 |
| Styrene | 0 |
| Vinyl Acetate | 0 |
| Methyl Methacrylate | 0 |
| Silquest A171 | 5 |
| Silquest A174 | 15 |
| Luperox 531M80 | 1.4 |

| **Booster** | |
|---|---|
| Butyl Acetate | 7.1 |
| Luperox 531M80 | 4 |
| Solids % | 78.2 |
| Viscosity (cps) | 19120 |
| Mw (Da) | 16718 |
| Mn (Da) | 6451 |
| PDI | 2.6 |
| Visual appearance | clear |

Resin from Ex. 1 is compared to blends with 2KPU raw materials: Tolonate HDT and Macryanal 515, by first diluting the system with the solvent of the synthesis to a viscosity between 100 and 200 cPs. Then the catalyst DBTDA is added to the diluted resin at a level of 0.5% active. Afterwards, the formulated resin is applied on a panel at 100um wet with a Mayer rod and left to dry at 23±2°C and 50±5% Relative Humidity.

| | Ex.2 | Ex.3 | Ex.4 |
|---|---|---|---|
| Ex. 1(g) | 100 | 72.4 | 59.8 |
| Tolonate HDT | 0 | 12.8 | 0 |
| Macrynal 515 BA70 | 0 | 0 | 24.3 |
| Dust-free time (min) | 3.5 | 6 | 4.5 |
| Koening hardnes (sec) after 6hrs | 8 | 9 | 10 |
| Koening hardnes (sec) after 24hrs | 31 | 25 | 36 |
| Koening hardnes (sec) after 7days | 88 | 76 | 83 |
| MEK resistance double-rubs 24hrs | 80 | 200 | 20 |
| MEK resistance double-rubs 1wk | 130 | 200 | 32 |
| MEK resistance double-rubs 2wks | 140 | 200 | 41 |

Results show compatibility of VV-silane systems with isocyanate or with acrylic polyol to further develop specific properties in 2KPU coatings.

**Examples 5 and 6:** in a glass reactor equipped with a stirrer and a nitrogen inflow. The initial reactor charge is poured in the reactor and a nitrogen blanket is applied (10ln/h). The stirrer is set at 80RPM. The temperature is set to 115°C. The monomer mix is prepared by mixing the monomers and the initiator. Once the temperature inside the reactor is reached, a shot of initiator is added, and the nitrogen flow is stopped. Afterwards the monomer mix is added into the reactor over a period of 4 hours. At the end of the addition, the booster composed of the initiator and the solvent is added for 1 hour at 115°C. Then, the reactor is kept at the same temperature for an extra hour. The reactor is eventually cooled down below 80°C and the product discharged.

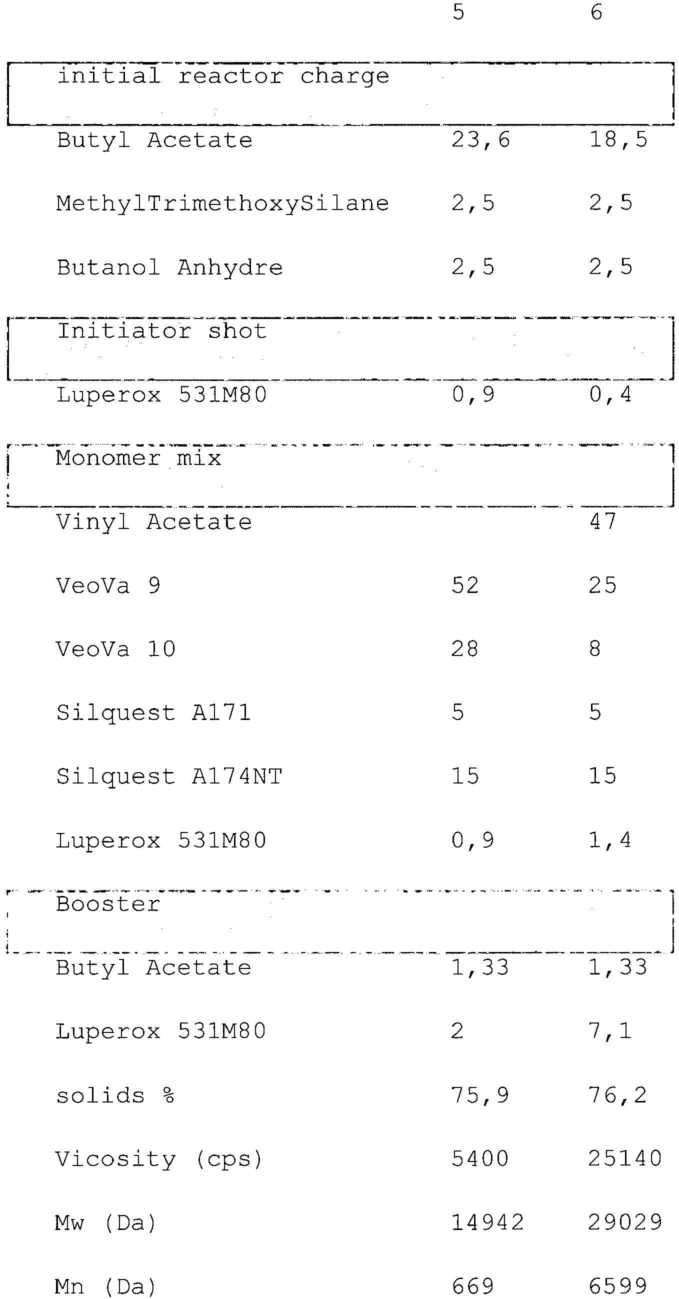

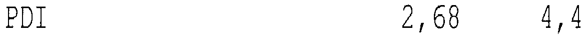

EX. 2K with NCO Tolonate HDT 90 as catalyst versus reference VV-silane recipe 210507AC

| **Trial #** | **Description** | **mass dry resin (g)** | **mass Tolonate HDT 90 (g)** | **mass Butyl Acetate (g)** | **visco measured (cPs)** | **%DBTDA** | **MEK 24h (drubs)** | **MEK 3week (drubs)** |
|---|---|---|---|---|---|---|---|---|
| A | 210507AC | 42.5 | 0.0 | 17.9 | 87 | 0.5 | 27 | 65 |
| B | 210507AC 2wt% NCO | 44.2 | 0.9 | 19.1 | 90 | 0.5 | 75 | 108 |
| C | 210507AC 5wt% NCO | 37.4 | 2.0 | 16.5 | 85 | 0.5 | 200 | 200 |
| D | 210507AC 10wt% NCO | 36.9 | 4.1 | 16.1 | 90 | 0.5 | 200 | 200 |

EX. 1K vs 2K with high VAM content VV-silane resin 210407LB without VTMS to stabilize the system

| **N°** | **Description** | **mass dry resin (g)** | **mass Butyl Acetate (g)** | **visco measured (cPs)** | **%DBTDA** | **visco measured after 18hrs (cPs)** | **DFT (min)** | **MEK 24h (drubs)** | **MEK 3week (drubs)** |
|---|---|---|---|---|---|---|---|---|---|
| E | 210407LB1K | 42.5 | 26.6 | 104 | 0.5 | 980 | 3 | 14 | 51 |
| F | 210407LB2K | 38.0 | 22.7 | 105 | 0.5 | - | 3 | 13 | 48 |

## Claims

1. A paint composition to be used in a two pack ambient curable, moisture curable, whereby the paint composition composed of a part A and a part B wherein
the part A is composed of:
• Aa. 20 to 80wt% of a copolymer composed
• Aa1, 97 to 0wt% of vinyl ester monomers of the formula 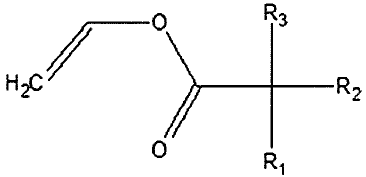
• wherein R1, R2, R3 are hydrogen or alkyl groups with 1 to 15 carbon atoms, the total number of carbon atoms of R1, R2, and R3 ranging from 1 to 20 ; and
• Aa2 0 to 40wt% of vinyl trimethoxy silane or vinyl triethoxy silane monomers,
• Aa3 0 to 40wt% of any other silane functional monomer
• Aa4 60 to 0% of vinyl acetate,
• Aa5 97 to 0% of acrylate or methacrylate monomers and,
• Aa6 0 to 30% of other copolymerisable monomer,
• Ab1 20 to 80% solvents,
• Ab2 0 to 60% pigments and fillers,
• Ab3 0 to 20% paint additives,
• Ab4 1 to 10% moisture scavenger
• Ac 0 to 70% of a polylol
and the sum of Aa2 and Aa3 is at least 5%
and of a part B which is composed of a catalyst solution composed of
• 0.1 to 50% of catalyst mix AND/OR aliphatic isocyanates
• 99.9 to 50% of solvents
• 0 to 50% pigments and fillers
• 0 to 50% of paint additives
whereby the weight ratio of part A/B is between 99/1 and 1/1, and whereby the polymer Aa and the polyol Ac has a number average molecular weight, Mn, between 1500 and 15000.
and Ac the polyol with Mn: from 1000 to 10000.

2. The composition of claim 1 whereby the polymer Aa is prepared in presence of a non-polymerizable water scavenger AND/OR a C1 to C9 non-polymerizable alcohol AND has a molecular weight distribution below 3.

3. The composition of any above claims whereby the copolymer has a total content of monomer Aa₄ and /or Aas, vinyl acetate and/or methyl methacrylate of at least 20%, preferably above 40%.

4. The composition of any above claims whereby component Aa3 consist of 5% to 40% of methacryloxypropyl tri methoxy silane and/or methacryloxypropyl triethoxy silane.

5. The composition of any above claims whereby part B is composed of a catalyst solution composed of 0.1 to 20% of catalyst mix and/or aliphatic isocyanates.

6. The composition of claim 5 in which the catalyst is composed of dibutyl tin dilaurate, dibutyl tin di-acetate and/or aliphatic isocyanate such as hexamethylene di-isocyanate and/or isophorone di-isocyanate derivatives

7. The composition of any above claims whereby part A has a shelf life stability of at least 2 weeks at 50°C.

8. The composition of any above claims whereby the coating applied at 23°C and relative humidity of 50% and a dry film thickness of 30 to 80 microns has a Konig hardness of at least 20 seconds after 48 hours.

9. The composition of any above claims whereby parts A and B are mixed a maximum of 48 hours before application with standard paint application methods.

10. An object coated with the paint composition of any above claims.
